# EUROPÄISCHE PATENTSCHRIFT

(11) **EP 0 740 576 B1**
(45) Veröffentlichungstag und Bekanntmachung des Hinweises auf die Patenterteilung: **26.11.1997**
(21) Anmeldenummer: 95906921.2
(22) Anmeldetag: 10.01.1995
(51) Int. Cl.: B01D 47/02, B01D 47/10, B05B 15/12

(54) **NASSABSCHEIDER**
WATER-SPRAY SEPARATOR
SEPARATEUR HUMIDE

(30) Priorität: 21.01.1994 DE 4401741
(43) Veröffentlichungstag der Anmeldung: 06.11.1996
(73) Patentinhaber: ABB FLÄKT AB, S-120 86 Stockholm (SE)
(72) Erfinder: ENEROTH, Jan-Mats, S-352 51 Växjö (SE); JOSEFSSON, Leif, Sterling Heights, MI 48310 (US); MILOJEVIC, Dragoslav, D-35510 Butzbach (DE)
(74) Vertreter: Füchsle, Klaus, Dipl.-Ing.
(86) Internationale Anmeldenummer: EP9500072
(87) Internationale Veröffentlichungsnummer: WO9519834

(56) Entgegenhaltungen:
- EP-A- 0 527 002
- GB-A- 2 039 778
- GB-A- 2 120 576
- US-A- 5 100 442

## Beschreibung

Die Erfindung betrifft einen Naßabscheider zum Reinigen von mit Partikeln verunreinigter Abluft aus einem Arbeitsraum und insbesondere zum Reinigen von Abluft mit Lackpartikeln aus einer Lackierspritzkabine gemäß dem Oberbegriff des Anspruchs 1.

Ein derartiger Naßabscheider ist aus der US-PS 5 100 442 bekannt. Der in dieser Druckschrift gezeigte Naßabscheider weist folgende Elemente auf, die in der genannten Reihenfolge von verunreinigter Abluft durchströmt werden: einen Einlauf, einen Expansionsabschnitt, einen quer zum Einlauf verlaufenden Umlenkabschnitt und eine Düse mit einem Kanalauslaß. Bei der gezeigten Anordnung verläuft die der Düse gegenüberliegende Wand des Expansionsabschnitts in Form einer Geraden, und es ist dieser Druckschrift nicht zu entnehmen, wodurch bei dieser Anordnung das entstehende Geräuschniveau in einem zulässigen Bereich gehalten werden kann.

Ein Hauptproblem bei der Konstruktion von Naßabscheidern besteht nämlich darin, den Geräuschpegel im Arbeitsraum möglichst niedrig zu halten, um für das dort arbeitende Personal erträgliche Arbeitsbedingungen zu schaffen. Wie sich aus den nachfolgenden Ausführungen ergibt, wurden bei herkömmlichen Naßabscheidern verschiedene Maßnahmen getroffen, um den vom Naßabscheider erzeugten Geräuschpegel im Arbeitsraum zu reduzieren.

Aus der DE-PS 28 14 276 ist eine Vorrichtung zum Reinigen der Abluft von Spritzkabinen bekannt. Bei der herkömmlichen Vorrichtung, die unterhalb eines Bodenrostes der Lackierspritzkabine angeordnet ist, wird die Abluft über einen trichterförmigen Einlauf zunächst einer scharfkantigen Einschnürung zugeführt, danach einer starken Richtungsänderung unterworfen und einer zweiten scharfkantigen Einschnürung mit geringerem Durchströmquerschnitt als bei der ersten Einschnürung zugeführt, um die Abluft anschließend in eine Kammer mit einem Flüssigkeitsbad einströmen zu lassen. Entlang der Leitwände des trichterförmigen Einlaufs wird eine Waschflüssigkeit in die Vorrichtung eingeleitet, so daß an der ersten Einschnürungskante des Strömungskanals ein Flüssigkeitsschleier entsteht. An der zweiten Einschnürungskante hinter der Richtungsänderung des Abluftstroms kommt es zu einer Zerstäubung der Flüssigkeit unter Turbulenz und zu einer innigen Vermischung der Flüssigkeit mit der Abluft. Durch den Flüssigkeitsschleier, der sich an der ersten Einschnürungsstelle bildet, werden die in der Abluft befindlichen Lackpartikel an ihrer Oberfläche mit Waschflüssigkeit benetzt. Durch die intensive Zerstäubung an der zweiten Einschnürungsstelle entsteht dann ein inniges Luft-Flüssigkeits-Gemisch, das das Aneinanderlagern der in der Abluft befindlichen Lackpartikel fördert und zu einer verbesserten Abscheidung dieser Lackpartikel aus der Abluft führt. Die zusammengeballten Lackpartikel werden anschließend entweder entlang einer nach der zweiten Einschnürungsstelle angeordneten Führungsfläche nach unten in ein Flüssigkeitsbad abgeführt oder gegen eine der zweiten Einschnürungsstelle gegenüberliegende Wand geschleudert, an der sie dann ebenfalls in das Flüssigkeitsbad rinnen.

Bei der bekannten Vorrichtung wirkt sich der Flüssigkeitsschleier an der ersten Einschnürungskante dämpfend auf die sich im Strömungskanal nach oben zur Spritzkabine hin ausbreitenden Schallwellen aus, die in erster Linie an der zweiten scharfkantigen Strömungsverengung entstehen. Eine weitere Schalldämpfung wird durch die Abbiegung des Abluftstromes erhalten, da sich dadurch die Schallwellen innerhalb des Abluftsstromes nicht geradlinig nach oben bis zur Spritzkabine hin ausdehnen können.

Ein weiterer herkömmlicher Naßabscheider ist in der DE-OS 33 17 230 beschrieben. Bei diesem bekannten Naßabscheider wird die Abluft durch einen ersten Venturi geleitet, in eine Dispergierkammer expandiert und danach durch einen zweiten Venturi mit einem scharfkantigen Drosselflansch in eine zweite Kammer mit einer Sammelzone geleitet. Aus einem Wasserreservoir wird Spülflüssigkeit in den trichterförmigen Einlaufbereich des ersten Venturi eingeleitet. Im ersten Venturi wird die Abluftströmung einer Richtungsänderung unterzogen und kann durch einen relativ weiten Hals in die Dispergierkammer einströmen. Dadurch, daß im ersten Venturi keine scharfkantigen Vorsprünge vorgesehen sind und der Hals einen relativ weiten Durchströmquerschnitt aufweist, wird die Geräuscherzeugung in diesem Bereich vergleichsweise niedrig gehalten. Beim ersten Venturi wird eine Vorabscheidung erreicht, indem sich der an der oberen Kanalwand entlangrinnende Wasserfilm nach dem Passieren des Halses in Tropfenform mit dem Abluftstrom vermischt. Es entsteht ein Dispergierstrom, der sich in einem schwachen Bogen über eine Führungsfläche zum zweiten Venturi hin erstreckt. Beim zweiten Venturi kommt es zu einer intensiven Vermischung der verunreinigten Abluft und der Wasserpartikel zu einer nebelähnlichen Konsistenz. Dieser Vorgang geht mit einer relativ großen Geräuscherzeugung einher. Der dort erzeugte Schall wird auf seinem Weg zur Spritzkabine durch den Dispergierstrom nach dem ersten Venturi gedämpft.

Es ist jedoch wünschenswert, gegenüber den bei herkömmlichen Naßabscheidern erzielbaren Geräuschpegeln im Arbeitsraum eine weitere Absenkung des Schallpegels zu erreichen.

Es ist daher die Aufgabe der Erfindung, einen Naßabscheider zu schaffen, der eine verbesserte Schalldämpfung zum Arbeitsraum hin aufweist.

Diese Aufgabe wird erfindungsgemäß durch einen Naßabscheider mit den Merkmalen des Patentanspruchs 1 gelöst.

Bei dem erfindungsgemäßen Naßabscheider wird die verunreinigte Abluft aus dem Arbeitsraum über den Einlauf in den Strömungskanal eingeführt, einer starken Richtungsänderung unterzogen und über die Düse dem Kanalauslaß zugeführt. Die Flüssigkeit, die an den Kanalwänden des Einlaufs eingeleitet wird, wird durch die abrupte Querschnittsverringerung am Kanalauslaß unter Turbulenz zerstäubt und es erfolgt eine innige Vermischung der verunreinigten Abluft mit der Flüssigkeit. Dadurch wird eine Aneinanderlagerung und Zusammenballung der Verunreinigungspartikel, wie z.B. Lackpartikel, mit Flüssigkeitstropfen erreicht und es kommt zu einer wirksamen Abscheidung der Verunreinigungspartikel nach dem Austritt aus dem Strömungskanal.

Die stärkste Schallerzeugung findet dabei im Bereich der Düse und des Kanalaustritts aufgrund der turbulenten Strömungsverhältnisse statt. Es wurde herausgefunden, daß eine besonders gute Schalldämpfung zum Arbeitsraum, wie z.B. einer Spritzkabine, hin erreicht wird, wenn der im Bereich der Düse und des Kanalauslasses erzeugte Schall überwiegend zur Düse und zum Kanalauslaß zurückreflektiert wird. Deshalb ist beim erfindungsgemäßen Naßabscheider ein Reflektorabschnitt hervorgesehen, der im Strömungskanal gegenüber dem Düsenbereich angeordnet ist, und dadurch wird erreicht, daß der größte Teil des im Düsenbereich erzeugten Schalls zur Düse zurückreflektiert wird und durch diese austritt, anstatt sich durch den Einlauf des Strömungskanals zum Arbeitsraum hin ausbreiten zu können. Ferner verläuft die Wand des Reflektorabschnitts im Längsschnitt zumindest abschnittsweise abweichend von der Form einer Geraden, die die engste Stelle zwischen Einlauf und Expansionsabschnitt und den Verbindungspunkt zwischen Expansionsabschnitt und Umlenkabschnitt miteinander verbindet. Durch diese Ausbildung der Wand des Reflektorabschnitts wird neben der Reflexion des Schalls zur Düse hin eine gewisse Konzentration in dem Bereich der Düse erreicht. Somit wird erfindungsgemäß eine äußerst wirksame Reduzierung des aus dem Naßabscheider in den Arbeitsraum gelangenden Schallpegels erzielt.

Bei einer vorteilhaften Weiterbildung der Erfindung ist der Reflektorabschnitt zusätzlich als Konzentrator ausgestaltet. Somit findet nicht nur eine bloße Reflexion des Schalls zurück in den Düsenbereich statt, sondern darüberhinaus eine Bündelung des zurückgeworfenen Schalls. Dadurch kann die Wirksamkeit der Schalldämpfung zum Arbeitsraum hin weiter verbessert werden. Durch die Konzentration des Schalls im Reflektor-/Konzentratorabschnitt kann der zurückgeworfene Schall noch gezielter auf den Kanalauslaß gerichtet werden, so daß der Schall direkt durch den Kanalauslaß austritt und es nicht zu weiteren Reflexionen im Düsenbereich kommt, durch die Teile des Schalls zum Auslauf hin abgelenkt werden könnten.

In einer günstigen Ausführung ist der Reflektorabschnitt im Längsschnitt schüsselförmig ausgebildet und mit seiner konkaven Seite der Düse zugewandt. Die konkrete geometrische Ausgestaltung der schüsselförmigen Ausbauchung in der der Düse gegenüberliegenden Kanalwand hängt von den geometrischen Verhältnissen des Naßabscheiders ab und ist für eine konkrete Naßabscheiderkonfiguration experimentell zu optimieren. Dabei kommen sowohl glatte Oberflächengestaltungen als auch polygonale Oberflächen des schüsselförmigen Reflektors in Frage.

In bevorzugten Ausführungsformen weist der Reflektorabschnitt im Längsschnitt eine kreisförmige, parabelförmige oder hyperbelförmige Oberfläche auf, jedoch kann auch eine andere vergleichbare konkave Kontur für den Reflektorabschnitt gewählt werden.

Weitere günstige Ausführungsformen bestehen darin, den Reflektorabschnitt im Längsschnitt in Form mehrerer Teilabschnitte auszubilden. Die einzelnen Teilabschnitte können entweder gerade sein oder es können Teilabschnitte mit unterschiedlichen Kurvenradien vorgesehen sein.

In einer bevorzugten Ausführung weist die den Reflektorabschnitt enthaltende Kanalwand einen im wesentlichen S-förmigen Längsquerschnittsverlauf auf. Dabei bildet die obere Hälfte des S-förmigen Verlaufs die eine Seite des Einlaufs und des Expansionsabschnitts des Strömungskanals, während die untere Hälfte des S-förmigen Verlaufs den Reflektorabschnitt und den verbleibenden Abschnitt bis zum Kanalauslaß bildet. Auf diese Weise läßt sich der Reflektorabschnitt sehr vorteilhaft in den Oberflächenverlauf der Kanalwand einbeziehen. Diese integrative Einbindung des Reflektorabschnitts bringt Vorteile für die Fertigung mit sich, da ein großer Teil der Kanalwand aus einem Stück hergestellt werden kann.

Eine vorteilhafte Ausführungsform des erfindungsgemäßen Naßabscheiders ergibt sich, wenn sämtliche Oberflächen der Kanalwände gekrümmt sind. Bei einer Wahl ausreichend großer Krümmungsradien, die gegebenenfalls experimentell zu ermitteln sind, wird eine stabile Schichtströmung der eingeleiteten Flüssigkeit geschaffen, da insbesondere auch scharfe Kanten vermieden werden. Durch das Vermeiden scharfer Kanten wird zudem auch die Eigengeräuschentwicklung in den Bereichen des Strömungskanals vor der abrupten Querschnittsverringerung gering gehalten.

Es ist günstig, den Einlauf achsensymmetrisch auszubilden. Daraus resultiert eine gleichmäßige und symmetrische Strömung der Abluft im Arbeitsraum, z.B. einer Spritzkabine, oberhalb des Naßabscheiders.

Weiterhin ist es bei der Gestaltung des Naßabscheider-Venturis zweckmäßig, daß sich der Kanalquerschnitt entlang des Strömungsverlaufs im Einlauf kontinuierlich verringert und im Expansionsabschnitt kontinuierlich vergrößert. Daraus resultiert ein geringerer Druckverlust im Abscheider.

Bei einer günstigen Ausgestaltung der Erfindung sind die Übergänge der Kanalwände im Bereich des Einlaufs und des Expansionsabschnitts weich ausgerundet. Dies ist für eine stabile Flüssigkeitsströmung in diesen Bereichen des Strömungskanals erforderlich. Z.B. bei den Ausführungen mit einer ebenen Fläche als Reflektorabschnitt kann dann aber der Übergang vom Reflektorabschnitt zum sich stromabwärts anschließenden Abschnitt der betreffenden Kanalwand über eine Kante erfolgen. Eine weitere bevorzugte Ausführungsform besteht darin, sämtliche Übergänge der Kanalwände weich ausgerundet zu gestalten, um dadurch zu einer im Kanalverlauf möglichst lange stabil bleibenden Schichtströmung der Flüssigkeit beizutragen. Außerdem tragen weich ausgeformte Übergänge zur Vermeidung von Verschmutzungen im Strömungskanal bei und ermöglichen zudem eine leichtere Reinigung und Wartung des Naßabscheiders.

Die Krümmungsradien im Bereich des Einlaufs, des Expansionsbereichs und gegebenenfalls des Umlenkbereichs des Strömungskanals sollten nicht zu klein gewählt werden, um eine stabile Schichtströmung der an den Kanalwänden entlangrinnenden Flüssigkeit zu gewährleisten. Weiterhin sollte auch der Krümmungsradius eines schüsselförmigen Reflektorabschnitts nicht zu klein bemessen werden, um in einem ausreichend großen Abschnitt des Kanals eine Schallkonzentrierung und -reflexion zu ermöglichen.

Es ist bevorzugt, den Kanalwandabschnitt, der den Kanalauslaß mit dem Reflektorabschnitt verbindet, als ebene Fläche auszubilden. Diese ebene Fläche bildet bei Anordnung des Naßabscheiders unterhalb eines Arbeitsraums den Boden des Naßabscheiders. Eine Ausbildung dieses Bodens als ebene Fläche reduziert die Fertigungskosten aufgrund der einfachen Geometrie dieses Bauteils, und insbesondere bei einer horizontalen Anordnung der ebenen Bodenwand wird die Bauhöhe des Naßabscheiders gering gehalten. Es ist auch bei einer Ausführung des Naßabscheiders, bei der sonst alle Oberflächen der Kanalwände, gegebenenfalls mit Ausnahme ebener Einlaufzuströmflächen, gekrümmt gestaltet sind, günstig, die Bodenwand im Hinblick auf eine geringe Bauhöhe des Naßabscheiders eben auszuführen und möglichst horizontal anzuordnen.

Es ist bevorzugt, die abrupte Querschnittsverringerung am Kanalauslaß in Form einer Blende auszubilden, die an der den Reflektorabschnitt enthaltenden Kanalwand vorgesehen ist. Insbesondere ist es günstig, die Blende lösbar zu befestigen, da dadurch die Wartung und Reinigung des Naßabscheiders von außen durch den Kanalauslaß erleichtert wird.

Eine weitere zweckmäßige Ausführung des Naßabscheiders besteht darin, zwischen Einlauf und Expansionsabschnitt einen Kanalabschnitt vorzusehen, in dessen Verlauf der Querschnitt konstant bleibt. Neben einer niedrigen Schallintensität im Arbeitsraum bieten die erfindungsgemäßen Ausführungen des Naßabscheiders die Vorteile einer niedrigen Verschmutzungsanfälligkeit und einer einfachen Wartung, eines kleinen Platzbedarfs und insbesondere einer niedrigen Bauhöhe sowie eines kleinen Materialverbrauchs und niedriger Fertigungskosten. Dabei wird für die Partikelabscheidung ein hoher Wirkungsgrad erzielt und eine sehr stabile Flüssigkeitsschichtströmung entlang der Kanalwände realisiert.

Nachfolgend werden Ausführungsbeispiele des erfindungsgemäßen Naßabscheiders mit Bezug auf die beigefügten Zeichnungen näher erläutert.

Es zeigen:
- Fig. 1: einen Längsschnitt durch eine erste Ausführung des erfindungsgemäßen Naßabscheiders;
- Fig. 2: einen Längschnitt durch eine zweite Ausführung des erfindungsgemäßen Naßabscheiders;
- Fig. 3: einen Längsschnitt durch eine dritte Ausführung des erfindungsgemäßen Naßabscheiders;
- Fig. 4: einen Längsschnitt durch eine vierte Ausführung des erfindungsgemäßen Naßabscheiders;

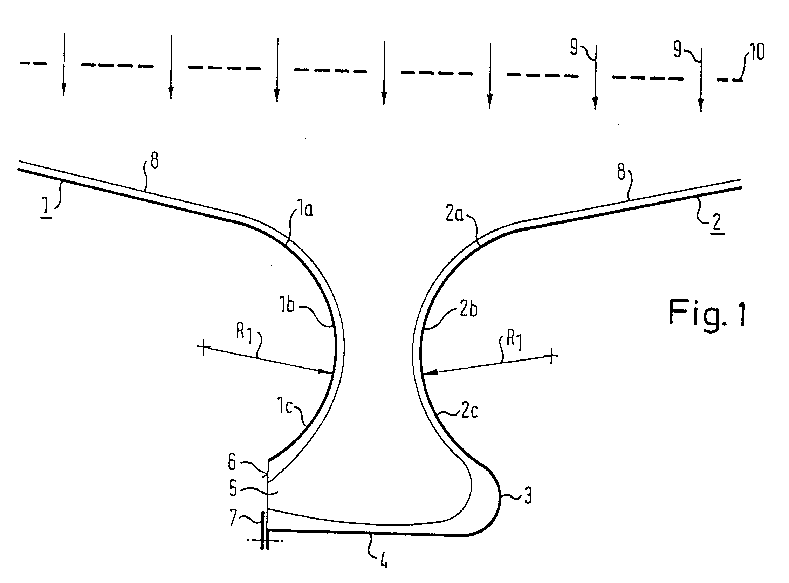

Fig. 1 zeigt eine erste Ausführung des erfindungsgemäßen Naßabscheiders. Der Naßabscheider ist unterhalb eines nicht dargestellten Arbeitsraums, wie z.B. einer Lackierspritzkabine, angeordnet, wobei der Boden des Arbeitsraums strömungsdurchlässig ausgebildet ist, z.B. in Form eines Gitterbodens 10. Durch den strömungsdurchlässigen Boden 10 des Arbeitsraums gelangt die z.B. mit Lackpartikeln verunreinigte Abluft 9 in den Einlauf 1a, 2a des Naßabscheiders.

Beim Naßabscheider wird ein Strömungskanal durch zwei im Abstand zueinander verlaufende Kanalwände 1, 2 gebildet. Bei dem in Fig. 1 gezeigten ersten Ausführungsbeispiel ist der Einlauf 1a, 2a symmetrisch ausgebildet, wobei sich an ebene Zuströmflächen, die trichterförmig leicht zueinander geneigt sind, ein gekrümmter Einlaufbereich anschließt, bei dem sich in Strömungsrichtung, d.h. in der Zeichnung von oben nach unten, der Kanalquerschnitt kontinuierlich bis zu einem minimalen Querschnitt an der Stelle 1b, 2b verringert. An den trichterförmigen Einlauf 1a, 2a schließt sich stromabwärts ein Expansionsbereich 1c, 2c an, in dem sich der Kanalquerschnitt kontinuierlich vergrößert. An der Kanalwand 2 folgt danach ein Reflektor-/Konzentratorabschnitt 3, an den sich ein Umlenkabschnitt 4 anschließt. In dem Strömungsabschnitt vor dem Kanalauslaß 6 wird durch die beiden Kanalwände 1, 2 eine Düse 5 gebildet. Im Bereich der Düse 5 verjüngt sich der Kanalquerschnitt kontinuierlich bis zum Kanalauslaß 6. Am Kanalauslaß 6 ist an der Kanalwand 2 eine Blende 7 lösbar angebracht, die den Kanalquerschnitt am Kanalauslaß 6 abrupt verringert.

Wie in Fig. 1 dargestellt, sind die beiden Kanalwände 1, 2 im Bereich zwischen den ebenen Einlaufzuströmflächen und dem auslaßseitigen Ende der Kanalwand 1 bzw. dem Beginn des Reflektor-/Konzentratorabschnitts 3 jeweils mit einem gleichen Radius R₁ geformt. Der Reflektor-/Konzentratorabschnitt 3 weist ebenfalls einen kreisbogenförmigen Längsschnitt auf. Der Umlenkabschnitt 4 der Kanalwand 2 ist als ebene Bodenplatte gestaltet, die in etwa parallel zur Bodenebene 10 des Arbeitsraums verläuft. Sämtliche Übergänge der einzelnen Kanalabschnitte sind weich ausgerundet und weisen keine scharfen Kanten auf. Lediglich die abrupte Querschnittsverringerung mittels der Blende 7 ist als scharfkantige Einschnürung gestaltet.

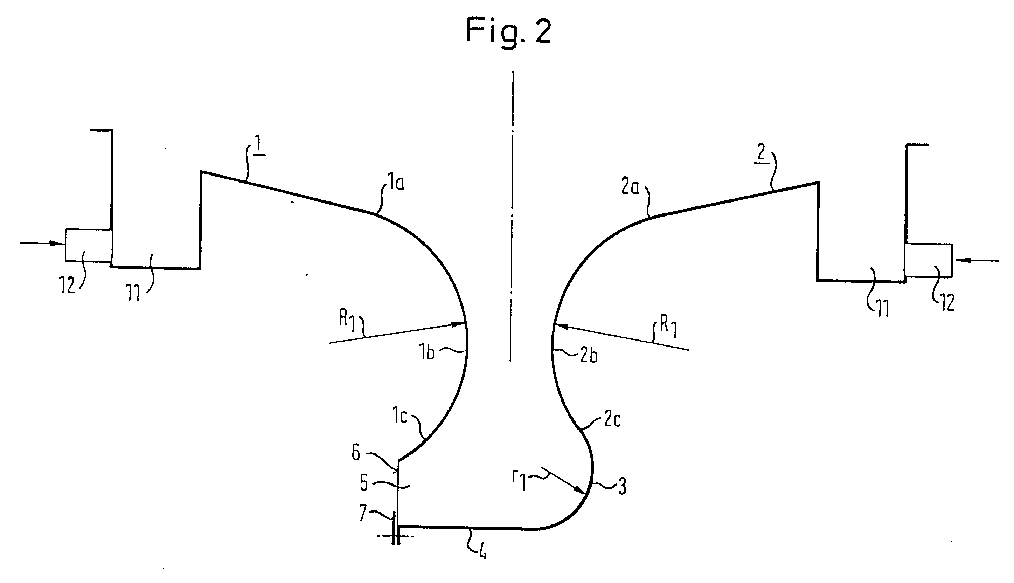

An den Zuströmflächen des Einlaufs 1a, 2a entlangrinnend wird eine Flüssigkeit 8 in den Strömungskanal des Naßabscheiders eingeleitet. Die Einleitung des Flüssigkeitsfilms erfolgt in bekannter Weise, wie z.B. durch einen Überlauf der Flüssigkeit aus beidseits des Einlaufs angebrachten Flüssigkeitsreservoirs 11, wie sie in Fig. 2 dargestellt sind. Die auf beiden Seiten der Einlaufzuströmflächen 1a, 2a befindlichen Flüssigkeitsreservoirs 11 werden ständig über Zuleitungen 12 mit Flüssigkeit versorgt (siehe Pfeile). Der Radius R₁ im Einlauf- und Expansionsbereich des Strömungskanals ist so groß gewählt, daß die Flüssigkeitsschichtströmung entlang der Kanalwände 1, 2 solange wie möglich stabil bleibt. Wie aus Fig. 1 ersichtlich, bleibt die Flüssigkeitsschichtströmung aufgrund des ausreichend groß bemessenen Radius R₁ und aufgrund der weichen Übergänge an der Kanalwand 1 bis zur Düse 5 und an der Kanalwand 2 bis zum Reflektor-/Konzentratorabschnitt 3 stabil und löst sich erst im Anschluß von den Kanalwänden ab. Durch die stabile Flüssigkeitsschichtströmung wird eine Verschmutzung der Kanalwände vermieden und die Eigengeräuscherzeugung durch die Flüssigkeit in diesen Bereichen bleibt gering.

Der Reflektor-/Konzentratorabschnitt 3 ist in der Kanalwand 2 mit weichen Übergängen zu den benachbarten Kanalabschnitten geformt. Er ist dem Kanalauslaß 6 und der Düse 5 in Richtung entgegen der Austrittsströmungsrichtung gegenüberliegend angeordnet, wobei die Austrittsströmungsrichtung in der Zeichnung etwa horizontal von rechts nach links verläuft.

Nachfolgend wird die Funktionsweise des Naßabscheiders näher erläutert. Die verunreinigte Abluft 9 strömt durch den Gitterboden 10 des Arbeitsraums und wird mittels der ebenen Zuströmflächen des Einlaufs 1a, 2a in den Naßabscheider eingeführt. Die Abluft strömt - in der Zeichnung von oben nach unten - durch den trichterförmigen Einlauf 1a, 2a, passiert die Stelle 1b, 2b mit minimalem Kanalquerschnitt und strömt weiter durch den Expansionsabschnitt 1c, 2c. Danach erfolgt eine Umlenkung der Abluftströmungsrichtung quer zur ursprünglichen Strömungsrichtung im Einlauf, d.h. in der Zeichnung eine Umlenkung der Strömungsrichtung von oben nach unten um etwa 90° in eine Strömungsrichtung von rechts nach links. Im Bereich der Düse 5 tritt, bedingt durch die abrupte Querschnittsverringerung mittels der Blende 7, unter Turbulenz eine innige Vermischung des Abluftstroms 9 mit der über die Kanalwände 1, 2 eingeleiteten Flüssigkeit 8 auf. Durch diese innige Vermischung kommt es zu einer Aneinanderlagerung und Zusammenballung der Verunreinigungsteilchen, wie z.B. Lackpartikel, die nach Austritt des Gemisches durch den Kanalauslaß 6 wirksam abgeschieden werden. Dabei tritt im Bereich der Düse 5 und des Kanalauslasses 6 eine starke Schallerzeugung auf. An dem schüsselförmig ausgebauchten Abschnitt 3 der Kanalwand 2 erfolgt eine Konzentration und Reflektion des im Düsenbereich erzeugten Schalls zurück zur Düse 5. Der Radius des Reflektor-/Konzentratorabschnitt 3 ist dabei ausreichend groß bemessen, um eine wirksame Schalldämpfung zum Arbeitsraum hin zu erzielen. Der Reflektor-/Konzentratorabschnitt 3 wirft also den Schall aus dem Düsenbereich in gebündelter Form zur Düse 5 und zum Kanalauslaß 6 zurück, so daß ein großer Teil des Schalls in unschädlicher Weise durch den Kanalauslaß 6 austreten kann und nicht in den Arbeitsraum gelangt.

Bei der in Fig. 2 gezeigten zweiten Ausführung des erfindungsgemäßen Naßabscheiders handelt es sich um eine Variante der ersten Ausführung, bei der im Vergleich zur Ausführung gemäß Fig. 1 der Radius r₁ des Reflektor-/Konzentratorabschnitts 3 größer bemessen ist, so daß sich eine größere Höhe des Abschnitts 3 ergibt. Außerdem ist bei dieser Variante die Ausbauchung des Abschnitts 3 nicht soweit in horizontaler Richtung zurückversetzt.

Ebenso wie die erste Ausführung weist die zweite Ausführung der Erfindung einen zur strichpunktiert eingezeichneten Achse symmetrischen Einlauf 1a, 2a auf. Auf beiden Seiten der Einlaufzuströmflächen 1a, 2a sind Wasserreservoirs 11 angeordnet, die ständig über Zuleitungen 12 mit Flüssigkeit versorgt werden. Wie in Fig. 1 dargestellt, wird durch kontinuierliches Überlaufen der Wasserreservoirs 11 eine Flüssigkeit an den Kanalwänden 1, 2 entlangrinnend in den Naßabscheider eingeleitet.

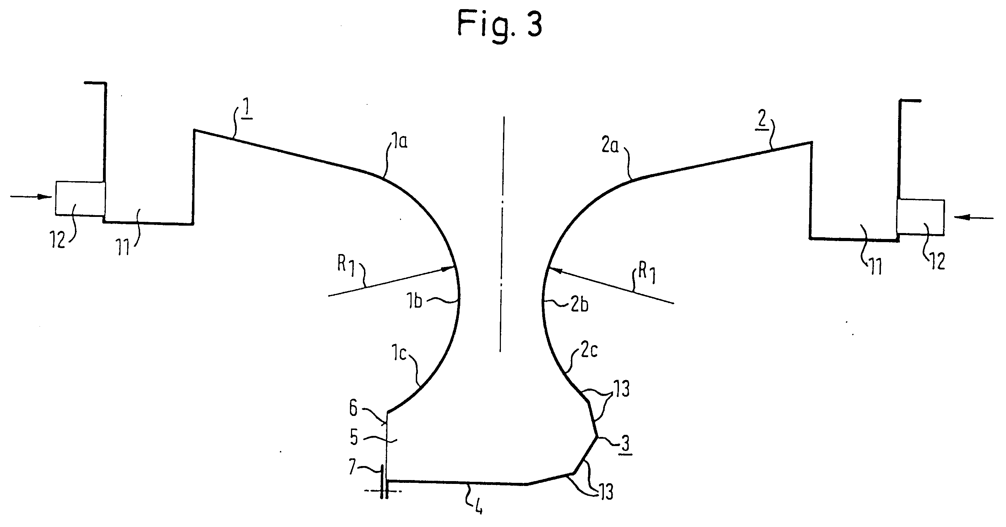

Die in Fig. 3 gezeigte dritte Ausführung des erfindungsgemäßen Naßabscheiders ist eine weitere Variante der ersten und der zweiten Ausführung gemäß den Figuren 1 und 2. Der Reflektor-/Konzentratorabschnitt 3 ist bei dieser Ausführung aus mehreren geraden Teilabschnitten 13 gebildet, die dem Reflektor-/Konzentratorabschnitt ebenfalls eine bauchige Form geben, die den Schall in gebündelter Form zur Düse 5 und zum Kanalauslaß 6 zurückreflektieren.

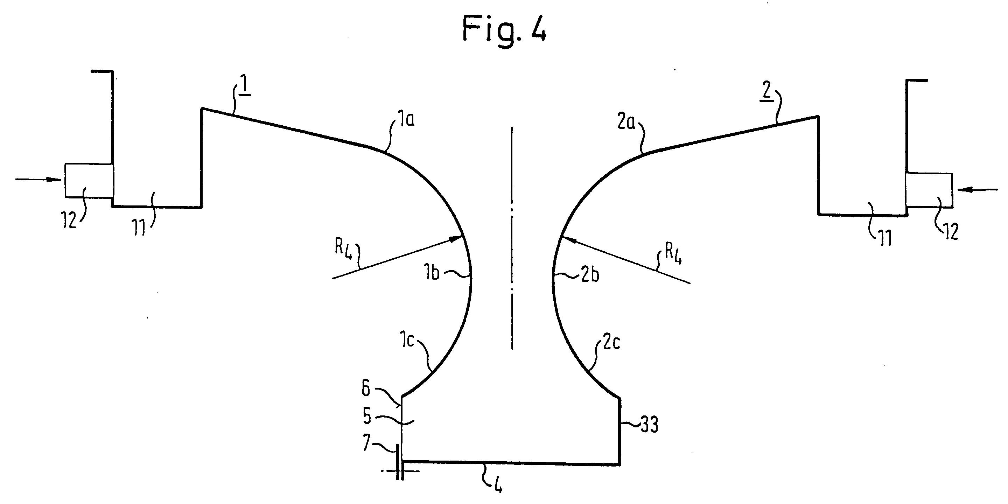

Bei der nachfolgend mit Bezug auf Fig. 4 beschriebenen Ausführung sind entsprechende Bauteile mit den gleichen Bezugszeichen wie in den Fig. 1, 2 und 3 gekennzeichnet. Nachdem der prinzipielle Aufbau und das Funktionsprinzip der weiteren Ausführungen mit den ersten drei beschriebenen Ausführungen übereinstimmt, werden für die weitere, in Fig. 4 gezeigte Ausführung lediglich die Unterschiede in der Gestaltung der Kanalgeometrie gegenüber den vorherigen Ausführungen erläutert.

Fig. 4 stellt eine vierte Ausführung des erfindungsgemäßen Naßabscheiders dar. Dort ist der gesamte Einlauf- und Expansionsbereich des Strömungskanals achsensymmetrisch zur strichpunktiert eingezeichneten Achse ausgebildet, wobei die Kanalwände 1, 2 im Symmetriebereich im Anschluß an die ebenen Einlaufzuströmflächen kreisbogenförmig mit einem Radius R₄ gestaltet sind. Der Reflektorabschnitt 33 ist parallel zur strichpunktierten Symmetrieachse und damit parallel zur Einlaufströmungsrichtung angeordnet. Die Höhe des Reflektorabschnitts 33 entspricht der Höhe des Kanalauslasses 6, wenn die Blende 7 abmontiert ist. Der ebene Reflektorabschnitt 33 reflektiert den im Düsenbereich erzeugten Schall ungebündelt zur Düse 5 zurück.

Sämtlichen vorangehend beschriebenen Ausführungsbeispielen ist ein hoher Wirkungsgrad bei der Abscheidung von Verunreinigungspartikeln aus der Abluft bei gleichzeitig sehr geringem, aus dem Naßabscheider in den Arbeitsraum gelangenden Schallpegel gemeinsam. Weiterhin wird bei allen Ausführungsbeispielen eine geringe Bauhöhe realisiert, wozu auch die Ausbildung des Umlenkabschnitts 4 als ebene Bodenplatte beiträgt. Im Bedarfsfall kann der Umlenkabschnitt 4 jedoch auch als gekrümmte Kanalwand ausgebildet werden. Die gezeigten Beispiele des erfindungsgemäßen Naßabscheiders zeichnen sich ferner durch weiche Übergänge im Einlauf- und Expansionsbereich des strömungskanals aus. Dadurch wird eine stabile Schichtströmung der Flüssigkeit 8 in diesen Bereichen des Naßabscheiders realisiert. Diese stabile Schichtströmung vermeidet eine Verschmutzung der Kanalwände 1, 2 und verringert somit den Reinigungsaufwand. Die Reinigung sowie die Wartung des Naßabscheiders wird durch die weichen Übergänge und durch die gute Zugänglichkeit der einzelnen Kanalabschnitte erleichtert, wozu auch die lösbare Blende 7 beiträgt. Bei den Ausführungen gemäß Fig. 1 und 2 sind sämtliche Übergänge im Strömungskanal weich ausgerundet, so daß hier eine besonders geringe Verschmutzungsanfälligkeit gegeben ist. Neben einem geringen Platzbedarf zeichnen sich die beschriebenen Ausführungsbeispiele durch kleinen Materialverbrauch und niedrige Fertigungskosten aus, nachdem zum einen leicht herstellbare ebene Kanalwandabschnitte und zum anderen Kanalabschnitte mit kreisbogenförmigen Längsschnitten verwendet werden, die z.T. für beide Kanalwände 1, 2 identisch sind. Schließlich ist zu den Ausführungen gemäß den Fig. 1 bis 3 noch zu bemerken, daß die dortigen kombinierten Reflektor-/Konzentratorabschnitte 3 auch zu besonders geringen Druckverlusten in der Düse 5 beitragen, was den Wirkungsgrad des Naßabscheiders bei der Abscheidung von Verunreinigungen aus der Abluft erhöht.

## Patentansprüche

1. Naßabscheider zum Reinigen von mit Partikeln verunreinigter Abluft (9) aus einem Arbeitsraum, insbesondere zum Reinigen von Abluft (9) mit Lackpartikeln aus einer Lackierspritzkabine, mit einem an den Arbeitsraum angrenzenden, durch zwei im Abstand verlaufende Kanalwände (1, 2) in seinem Querschnittsverlauf festgelegten Strömungskanal, in den die verunreinigte Abluft (9) einströmt und in den, an den Kanalwänden (1, 2) entlangrinnend, eine Flüssigkeit (8) eingeleitet wird, wobei der Strömungskanal folgendes umfaßt:
- einen Einlauf (1a, 1b, 2a, 2b),
- einen sich anschließenden Expansionsabschnitt (1c, 2c),
- einen sich anschließenden Umlenkabschnitt (4), der die Abluftströmung in eine Richtung quer zur Strömungsrichtung im Einlauf (1a, 1b, 2a, 2b) umlenkt,
- eine sich anschließende Düse (5), und
- einen sich anschließenden Kanalauslaß (6), an dem eine abrupte Verringerung (7) des Kanalquerschnitts vorgesehen ist,
dadurch **gekennzeichnet**, daß
- ein Reflektorabschnitt (3; 33) vorgesehen ist,
- der an der der Düse (5) in Richtung entgegen der Düsenströmungsrichtung gegenüberliegenden Kanalwand (2) ausgebildet ist,
- der den im Bereich der Düse (5) entstehenden Schall im wesentlichen zur Düse (5) zurückreflektiert, und
- dessen Wand im Längsschnitt zumindest abschnittsweise von der Form einer Geraden abweicht, die die engste Stelle zwischen Einlauf (1a, 1b, 2a, 2b) und Expansionsabschnitt (1c, 2c) und den Verbindungspunkt zwischen Expansionsabschnitt (1c, 2c) und Umlenkabschnitt (4) miteinander verbindet.

2. Naßabscheider nach Anspruch 1, dadurch gekennzeichnet, daß der Reflektorabschnitt zusätzlich als Konzentrator (3) ausgebildet ist.

3. Naßabscheider nach Anspruch 1, dadurch gekennzeichnet, daß der Reflektorabschnitt (3) im Längsschnitt schüsselförmig ausgebildet ist und mit seiner konkaven Seite der Düse (5) zugewandt ist.

4. Naßabscheider nach Anspruch 1 oder 2, dadurch gekennzeichnet, daß der Reflektorabschnitt (3) im Längsschnitt eine kreisförmige, parabelförmige oder hyperbelförmige Oberfläche aufweist.

5. Naßabscheider nach Anspruch 1 oder 2, dadurch gekennzeichnet, daß der Reflektorabschnitt (3) im Längsschnitt zwei oder mehrere gerade Teilabschnitte (13) aufweist.

6. Naßabscheider nach Anspuch 1 oder 2, dadurch gekennzeichnet, daß der Reflektorabschnitt (3) im Längsschnitt zwei oder mehrere Teilabschnitte mit unerschiedlichen Kurvenradien aufweist.

7. Naßabscheider nach einem der Ansprüche 1 bis 5, dadurch gekennzeichnet, daß die den Reflektorabschnitt (3) enthaltende Kanalwand (2) einen im wesentlichen S-förmigen Längschnittverlauf hat.

8. Naßabscheider nach einem der Ansprüche 1 bis 6, dadurch gekennzeichnet, daß sämtliche Oberflächen der Kanalwände (1, 2) gekrümmt sind.

9. Naßabscheider nach einem der Ansprüche 1 bis 8, dadurch gekennzeichnet, daß der Einlauf (1a, 1b, 2a, 2b) achsensymmetrisch ist.

10. Naßabscheider nach einem der Ansprüche 1 bis 9, dadurch gekennzeichnet, daß der Kanalquerschnitt sich entlang des Strömungsverlaufs im Einlauf (1a, 1b, 2a, 2b) kontinuierlich verringert und im Expansionsabschnitt (1c, 2c) kontinuierlich vergrößert.

11. Naßabscheider nach einem der Ansprüche 1 bis 10, dadurch gekennzeichnet, daß zumindest die Übergänge der Kanalwände (1, 2) im Bereich des Einlaufs (1a, 1b, 2a, 2b) und des Expansionsabschnitts (1c, 2c) weich ausgerundet sind.

12. Naßabscheider nach einem der Ansprüche 1 bis 11, dadurch gekennzeichnet, daß der den Kanalauslaß (6) mit dem Reflektorabschnitt (3) verbindende Kanalwandabschnitt (4) als ebene Fläche ausgebildet ist.

13. Naßabscheider nach einem der Ansprüche 1 bis 12, dadurch gekennzeichnet, daß zwischen Einlauf (1a, 1b, 2a, 2b) und Expansionsabschnitt (1c, 2c) ein Kanalabschnitt mit gleichbleibendem Querschnitt vorgesehen ist.

## Claims

1. Scrubber for cleaning exhaust air (9) from a work room containing dirt particles, especially for cleaning exhaust air (9) from a spray paint booth containing paint particles, with a flow channel, defined in its transverse direction by two spaced apart channel walls (1, 2) bordering onto the work room, into which flows the dirt-containing exhaust air (9) and into which is introduced a fluid (8) flowing along the channel walls (1, 2), in which the flow channel comprises the following:
- an inlet (1a, 1b, 2a, 2b),
- connected to this an expansion section (1c, 2c),
- connected to this a deflection section (4) which deflects the exhaust flow into a direction transverse to the flow direction in the inlet (1a, 1b, 2a, 2b),
- connected to this a nozzle (5), and
- connected to this a channel outlet (6) which is provided with an abrupt reduction in the channel cross-section,
characterised in that
- a reflector section (3; 33) is provided
- which is constructed in the channel wall (2) situated opposite the nozzle (5) in the direction counter to the nozzle flow direction,
- which reflects back essentially to the nozzle (5) the sound produced in the region of the nozzle (5), and
- whose wall in longitudinal section deviates at least in sections from the form of a straight line which joins together the narrowest point between inlet (1a, 1b, 2a, 2b) and expansion section (1c, 2c) and the connecting point between expansion section (1c, 2c) and the deflection section (4).

2. Scrubber according to claim 1, characterised in that the reflector section is additionally constructed as a concentrator (3).

3. Scrubber according to claim 1, characterised in that the reflector section (3) in longitudinal section is constructed in the form of a key and its concave side faces the nozzle (5).

4. Scrubber according to claim 1 or 2, characterised in that the reflector section (3) in longitudinal section has a circular, parabolic or hyperbolic surface.

5. Scrubber according to claim 1 or 2, characterised in that the reflector section (3) in longitudinal section has two or more straight partial sections (13).

6. Scrubber according to claim 1 or 2, characterised in that the reflector section (3) in longitudinal section has two or more partial sections with different curve radii.

7. Scrubber according to one of the claims 1 to 5, characterised in that the channel wall (2) containing the reflector section (3) has an essentially S-shaped longitudinal section.

8. Scrubber according to one of the claims 1 to 6, characterised in that all the surfaces of the channel walls (1, 2) are curved.

9. Scrubber according to one of the claims 1 to 8, characterised in that the inlet (1a, 1b, 2a, 2b) is axially symmetric.

10. Scrubber according to one of the claims 1 to 9, characterised in that the channel cross-section continuously decreases along the flow passage in the inlet (1a, 1b, 2a, 2b) and continuously increases in the expansion section (1c, 2c).

11. Scrubber according to one of the claims 1 to 10, characterised in that at least the transitions of the channel walls (1, 2) in the region of the inlet (1a, 1b, 2a, 2b) and the expansion section (1c, 2c) are softly rounded out.

12. Scrubber according to one of the claims 1 to 11, characterised in that the channel wall section (4) connecting the channel outlet (6) to the reflector section (3) is constructed as an even surface.

13. Scrubber according to one of the claims 1 to 12, characterised in that between inlet (1a, 1b, 2a, 2b) and expansion section (1c, 2c) there is provided a channel section with unchanged cross-section.

## Revendications

1. Séparateur humide pour la purification d'air d'évacuation (9) pollué par des particules, en provenance d'un local de travail, notamment pour la purification d'air d'évacuation (9) renfermant des particules de peinture en provenance d'une cabine de peinture de pulvérisation, le séparateur comprenant un canal d'écoulement, qui est adjacent au local de travail, dont le tracé de la section transversale est déterminé par deux parois de canal (1, 2) s'étendant à distance l'une de l'autre, dans lequel pénètre l'air d'évacuation (9) pollué, et dans lequel est envoyé un liquide (8) ruisselant le long des parois de canal (1, 2), le canal d'écoulement comprenant les éléments suivants:
- une entrée (1a, 1b, 2a, 2b),
- s'y raccordant, un tronçon d'évasement (1c, 2c),
- s'y raccordant, un tronçon de déviation (4), qui dévie l'écoulement d'air d'évacuation dans une direction transversale à la direction d'écoulement dans l'entrée (1a, 1b, 2a, 2b),
- s'y raccordant, une buse (5), et
- s'y raccordant une sortie de canal (6), au niveau de laquelle est prévue une réduction brutale (7) de la section transversale du canal,
**caractérisé** en ce qu'il est prévu un tronçon de réflecteur (3; 33)
- qui est formé sur la paroi de canal (2) opposée à la buse (5) dans la direction à l'encontre de la direction d'écoulement de buse,
- qui réfléchit en retour le bruit engendré dans la région de la buse (5), sensiblement vers la buse (5), et
- dont la paroi, en coupe longitudinale, diffère, au moins sur certains tronçons, de la forme d'une droite reliant l'endroit le plus étroit entre l'entrée (1a, 1b, 2a, 2b) et le tronçon d'évasement, et le point de raccordement entre le tronçon d'évasement (1c, 2c) et le tronçon de déviation (4).

2. Séparateur humide selon la revendication 1, **caractérisé** en ce que le tronçon de réflecteur est réalisé, en plus, sous la forme d'un concentrateur (3).

3. Séparateur humide selon la revendication 1, **caractérisé** en ce que le tronçon de réflecteur (3) présente en coupe longitudinale, une forme de cuvette, et est dirigé, avec son côté concave vers la buse (5).

4. Séparateur humide selon la revendication 1 ou 2, **caractérisé** en ce que le tronçon de réflecteur (3) présente, en coupe longitudinale, une surface de forme circulaire, de forme parabolique ou de forme hyperbolique.

5. Séparateur humide selon la revendication 1 ou 2, **caractérisé** en ce que le tronçon de réflecteur (3) présente en coupe longitudinale, deux tronçons partiels rectilignes (13), ou plus.

6. Séparateur humide selon la revendication 1 ou 2, **caractérisé** en ce que le tronçon de réflecteur (3) présente en coupe longitudinale, deux tronçons partiels de rayon de courbure différent, ou plus.

7. Séparateur humide selon l'une des revendications 1 à 5, **caractérisé** en ce que la paroi de canal (2) comprenant le tronçon de réflecteur (3), présente un tracé en coupe longitudinale, sensiblement en forme de "S".

8. Séparateur humide selon l'une des revendications 1 à 6, **caractérisé** en ce que l'ensemble des surfaces des parois de canal (1, 2) sont courbées.

9. Séparateur humide selon l'une des revendications 1 à 8, **caractérisé** en ce que l'entrée (1a, 1b, 2a, 2b) est symétrique par rapport à l'axe.

10. Séparateur humide selon l'une des revendications 1 à 9, **caractérisé** en ce que la section transversale du canal, le long du parcours d'écoulement, se rétrécit en continu dans l'entrée (1a, 1b, 2a, 2b), et s'agrandit en continu dans le tronçon d'évasement (1c, 2c).

11. Séparateur humide selon l'une des revendications 1 à 10,, **caractérisé** en ce qu'au moins les raccordements des parois de canal (1, 2), dans la zone de l'entrée (1a, 1b, 2a, 2b) et du tronçon d'évasement (1c, 2c), sont arrondis de manière "fluide".

12. Séparateur humide selon l'une des revendications 1 à 11, **caractérisé** en ce que le tronçon de paroi de canal (4) reliant la sortie de canal (6) au tronçon de réflecteur (3), est réalisée sous forme de surface plane.

13. Séparateur humide selon l'une des revendications 1 à 12, **caractérisé** en ce qu'entre l'entrée (1a, 1b, 2a, 2b) et le tronçon d'évasement (1c, 2c), est prévu un tronçon de canal à section transversale constante.
